# EUROPEAN PATENT APPLICATION

(11) **EP 4 807 404 A1**
(43) Date of publication of application: **16.09.2026**
(21) Application number: 24887755.7
(22) Date of filing: 23.10.2024
(51) Int. Cl.: G01V 5/00

(54) **LINEAR SCANNING CT IMAGING SYSTEM AND METHOD**

(30) Priority: 09.11.2023 CN 202311490080
(71) Applicant: Tsinghua University, Haidian District, Beijing 100084 (CN); NUCTECH COMPANY LIMITED, Beijing 100084 (CN)
(72) Inventor: ZHANG, Li, Beijing 100084 (CN); CHEN, Zhiqiang, Beijing 100084 (CN); SHEN, Le, Beijing 100084 (CN); ZHAO, Tiao, Beijing 100084 (CN); SUN, Yunda, Beijing 100084 (CN); HUANG, Qingping, Beijing 100084 (CN); LIANG, Wuyang, Beijing 100084 (CN); LIU, Junhao, Beijing 100084 (CN)
(74) Representative: Gunzelmann, Rainer
(86) International application number: PCT/CN2024/126811
(87) International publication number: WO 2025/098142

(57) **Abstract**

A linear scanning CT imaging system, including: a conveying device (3) used to move a scanned object (30) in a predetermined conveying direction (D3) in a scanning channel (4); ray sources (1) used to alternately emit ray beams to form a scanning region; detectors (2), including a first detector (21) used to detect first projection data formed by the ray beams transmitted through the scanned object (30) during a process of the scanned object (30) passing through the scanning region, and a second detector (22) used to detect second projection data formed by ray beams transmitted through the scanned object (30) during the process of the scanned object (30) passing through the scanning region; and an imaging device (5) used to: generate a digital radiographic image of the scanned object (30) according to second projection data, and obtain a computed tomography image of the scanned object (30) according to first projection data and second projection data. A linear scanning CT imaging method is further provided.

## Description

This application claims priority to Chinese Patent Application No. 202311490080.9 filed on November 9, 2023, which is incorporated herein by reference in its entirety.

### TECHNICAL FIELD

The present disclosure relates to a field of radiation imaging, and in particular, to a linear scanning CT imaging system and method.

### BACKGROUND

At present, safety issues have received increasing attention, and a variety of security inspection devices are installed in public places.

For example, relevant X-ray inspection systems for large cargoes and containers mostly operate in a DR imaging mode, acquiring single-energy or dual-energy perspective images from a single angle or multiple angles, followed by manual interpretation to determine whether prohibited items are present in cargoes.

Another example is a CT inspection system based on a linear scanning trajectory, which may also be used for security inspection of cargoes. This technology does not require rotary components, and the ray source and detector are fixed on opposite sides of the scanning channel. Scanning of objects may be performed through a translational motion. This technology may also obtain an attenuation coefficient information inside the object for automatic identification.

However, based on the current application situation, the above two technologies have at least the following related problems.

The DR imaging inspection system may only provide perspective images at one or more angles. If the inspected cargo has a complex composition and is tightly arranged, the perspective images will have serious overlap and occlusion, making it difficult to extract information about different items and identify prohibited items.

The linear CT scanning system may solve the problem of occlusions in perspective images. However, due to insufficient scanning angles, it is difficult to accurately position a scanning geometry. Moreover, in order to improve scanning and image processing efficiency, the data processing procedures are often insufficient. Compared with images provided by traditional DR systems, CT images inevitably suffer from degraded spatial resolution, unavoidable reconstruction artifacts, and even distortions in object shapes.

The above information disclosed in this section is merely intended to provide background understanding of the inventive concepts of the present disclosure, and therefore may contain information that does not constitute prior art.

### SUMMARY

The present disclosure provides a linear scanning CT imaging system and method.

According to a first aspect of the present disclosure, a linear scanning CT imaging system is provided, including: a conveying device configured to move a scanned object in a predetermined conveying direction in a scanning channel, where the conveying device includes a conveying surface for placing the scanned object; m ray sources configured to alternately emit ray beams to form a scanning region, where the m ray sources are located on a side of the scanning channel, and m is a positive integer greater than or equal to 2; and n detectors configured to detect projection data formed by the ray beams transmitted through the scanned object during a process of the scanned object passing through the scanning region, where the n detectors are located on the other side of the scanning channel and are sequentially arranged at intervals in the conveying direction, and n is a positive integer greater than or equal to 3, where the n detectors include n1 first detectors and n2 second detectors, n1 is a positive integer greater than or equal to 2, and n2 is a positive integer greater than or equal to 1; the n1 first detectors are configured to detect first projection data formed by the ray beams transmitted through the scanned object during the process of the scanned object passing through the scanning region; the n2 second detectors are configured to detect second projection data formed by the ray beams transmitted through the scanned object during the process of the scanned object passing through the scanning region; and where the system further includes an imaging device configured to: generate a digital radiographic image of the scanned object according to the second projection data; and generate a computed tomography image of the scanned object according to the first projection data and the second projection data.

According to an embodiment of the present disclosure, at least one of the second detectors is different from each of the first detectors.

According to an embodiment of the present disclosure, at least one of the second detectors has a higher resolution than each of the first detectors.

According to an embodiment of the present disclosure, at least one of the second detectors has a greater number of pixels than each of the first detectors; and/or at least one of the second detectors has a smaller pixel size than each of the first detectors.

According to an embodiment of the present disclosure, at least one of the second detectors is made of a different crystal material from each of the first detectors; and/or at least one of the second detectors has a different thickness in a ray incident direction from each of the first detectors.

According to an embodiment of the present disclosure, at least one of the second detectors exhibits less crystal afterglow than each of the first detectors; and/or at least one of the second detectors has a higher detection efficiency than each of the first detectors.

According to an embodiment of the present disclosure, the first detector includes a plurality of first detector modules, the second detector includes a plurality of second detector modules, and an arrangement of the plurality of first detector modules is different from an arrangement of the plurality of second detector modules.

According to an embodiment of the present disclosure, the n1 first detectors are linear detector arrays; and/or the n2 second detectors are linear detector arrays.

According to an embodiment of the present disclosure, the n1 first detectors are linear detector arrays; and/or at least one of the second detectors includes a vertical-arm detector arranged in a first direction and a horizontal-arm detector arranged in a second direction, and the second direction intersects both the conveying direction and the first direction.

According to an embodiment of the present disclosure, the n1 first detectors are linear detector arrays; and/or at least one of the second detectors includes a vertical-arm detector arranged in a first direction, a first horizontal-arm detector arranged in a second direction and a second horizontal-arm detector arranged in the second direction, the first horizontal-arm detector and the second horizontal-arm detector are respectively located on an upper side and a lower side of the vertical-arm detector in the first direction, and the second direction intersects both the conveying direction and the first direction.

According to an embodiment of the present disclosure, the m ray sources are sequentially arranged at intervals in a first straight line, and the first straight line is an imaginary straight line extending along a first direction perpendicular to the conveying surface.

According to an embodiment of the present disclosure, the n detectors include a single second detector, and at least one first detector is disposed on each side of the single second detector along the conveying direction.

According to an embodiment of the present disclosure, a plane defined by the single second detector and the first straight line is perpendicular to the conveying direction.

According to an embodiment of the present disclosure, at least one of the second detectors includes k sub-detectors sequentially arranged at intervals in the conveying direction, and k is a positive integer greater than or equal to 2; and an arrangement interval in the conveying direction between any two adjacent sub-detectors among the k sub-detectors is smaller than an arrangement interval in the conveying direction between any two adjacent first detectors among the n1 first detectors.

According to an embodiment of the present disclosure, the imaging device is further configured to: combine the second projection data from the k sub-detectors to generate the digital radiographic image of the scanned object.

According to an embodiment of the present disclosure, the horizontal-arm detector includes a plurality of detector modules connected end to end in sequence.

According to an embodiment of the present disclosure, the horizontal-arm detector includes a plurality of detector modules arranged at intervals in the second direction.

According to an embodiment of the present disclosure, a light receiving surface of each detector module is perpendicular to a second straight line, the second straight line is a straight line connecting an i^{th} ray source and a predetermined point on the light receiving surface, the predetermined point is located on a boundary of or within the light receiving surface, and i is a positive integer greater than or equal to 1 and less than or equal to m.

According to an embodiment of the present disclosure, the conveying device includes a plurality of conveying rollers, and in the conveying direction, the second horizontal-arm detector is located at a gap between two adjacent conveying rollers.

According to an embodiment of the present disclosure, the number n2 of second detectors is greater than or equal to 2, and the n2 second detectors and the n1 first detectors are alternately arranged in the conveying direction.

According to an embodiment of the present disclosure, among the n2 second detectors, a plane defined by one second detector and the first straight line is perpendicular to the conveying direction, and a plane defined by any other second detector and the first straight line form an angle greater than 90° or less than 90° with the conveying direction.

According to an embodiment of the present disclosure, each of the n2 second detectors includes a vertical-arm detector arranged in a first direction and a horizontal-arm detector arranged in a second direction, and the second direction intersects both the conveying direction and the first direction.

According to an embodiment of the present disclosure, for each of the second detectors, a plane formed by an intersection of the vertical-arm detector and the horizontal-arm detector of the second detector extends through the first straight line.

According to an embodiment of the present disclosure, the scanning channel is a linear channel.

In a second aspect of the present disclosure, a linear scanning CT imaging method is provided, including: moving a scanned object in a predetermined conveying direction in a scanning channel by means of a conveying device, where the conveying device includes a conveying surface for placing the scanned object; alternately emitting ray beams from m ray sources to form a scanning region, where the m ray sources are located on a side of the scanning channel, and m is a positive integer greater than or equal to 2; moving the scanned object to pass through the scanning region; detecting projection data formed by the ray beams transmitted through the scanned object by means of n detectors during a process of the scanned object passing through the scanning region, where the n detectors are located on the other side of the scanning channel and are sequentially arranged at intervals in the conveying direction, and n is a positive integer greater than or equal to 3, where the n detectors include n1 first detectors and n2 second detectors, n1 is a positive integer greater than or equal to 2, and n2 is a positive integer greater than or equal to 1; where the detecting projection data formed by the ray beams transmitted through the scanned object by means of n detectors includes: detecting first projection data formed by the ray beams transmitted through the scanned object by means of the n1 first detectors; and detecting second projection data formed by the ray beams transmitted through the scanned object by means of the n2 second detectors; and where the method further includes: generating a digital radiographic image of the scanned object according to the second projection data; and generating a computed tomography image of the scanned object according to the first projection data and the second projection data.

According to an embodiment of the present disclosure, at least one of the second detectors includes a vertical-arm detector arranged in a first direction and a horizontal-arm detector arranged in a second direction, and the second direction intersects both the conveying direction and the first direction; and the generating a digital radiographic image of the scanned object according to the second projection data includes: proportionally adjusting the second projection data detected by the vertical-arm detector and the second projection data detected by the horizontal-arm detector, and then combining adjusted data to generate the digital radiographic image of the scanned object.

According to an embodiment of the present disclosure, at least one of the second detectors includes k sub-detectors sequentially arranged at intervals in the conveying direction, k is a positive integer greater than or equal to 2; an arrangement interval in the conveying direction between any two adjacent sub-detectors among the k sub-detectors is smaller than an arrangement interval in the conveying direction between any two adjacent first detectors among the n1 first detectors; and the generating a digital radiographic image of the scanned object according to the second projection data includes: combining the second projection data from the k sub-detectors to generate the digital radiographic image of the scanned object.

### BRIEF DESCRIPTION OF THE DRAWINGS

For better understanding of the present disclosure, a detailed description of the present disclosure will be provided with reference to the accompanying drawings, in which:
FIG. 1 schematically shows a schematic structural diagram of a linear scanning CT imaging system provided by an embodiment of the present disclosure;
FIG. 2A and FIG. 2B respectively schematically show structural diagrams of a first detector and a second detector provided by an embodiment of the present disclosure, in which a pixel distribution is schematically shown;
FIG. 3A and FIG. 3B respectively schematically show structural diagrams of a first detector and a second detector provided by an embodiment of the present disclosure, in which a detector module distribution is schematically shown;
FIG. 4 schematically shows a structural diagram of a linear scanning CT imaging system provided by an embodiment of the present disclosure, in which the second detector is schematically shown to include an L-shaped detector;
FIG. 5A and FIG. 5B respectively schematically show side views of a linear scanning CT imaging system observed in a conveying direction provided by an embodiment of the present disclosure;
FIG. 6 and FIG. 7 respectively show structural diagrams of a linear scanning CT imaging system provided by an embodiment of the present disclosure, in which the second detector is schematically shown to include a plurality of sub-detectors;
FIG. 8 schematically shows a side view of a linear scanning CT imaging system provided by an embodiment of the present disclosure, in which the second detector is schematically shown to include a U-shaped detector;
FIG. 9 schematically shows a top view of a linear scanning CT imaging system provided by an embodiment of the present disclosure, in which a relative positional relationship between the second detector and the conveying device is schematically shown;
FIG. 10 schematically shows a side view of a linear scanning CT imaging system provided by an embodiment of the present disclosure, in which an arrangement of a horizontal-arm detector of the second detector is schematically shown;
FIG. 11 schematically shows a side view of a linear scanning CT imaging system provided by an embodiment of the present disclosure, in which another arrangement of the horizontal-arm detector of the second detector is schematically shown;
FIG. 12 schematically shows a structural diagram of a linear scanning CT imaging system provided by an embodiment of the present disclosure, in which a plurality of second detectors are schematically shown;
FIG. 13 schematically shows a structural diagram of a linear scanning CT imaging system provided by an embodiment of the present disclosure, in which a plurality of L-shaped second detectors are schematically shown;
FIG. 14 schematically shows a structural diagram of a linear scanning CT imaging system provided by an embodiment of the present disclosure, in which a rotary device is schematically shown;
FIG. 15 schematically shows a structural block diagram of a linear scanning CT imaging system provided by an embodiment of the present disclosure;
FIG. 16 schematically shows a schematic diagram of a trigger pulse sequence provided by an embodiment of the present disclosure;
FIG. 17 schematically shows a schematic diagram of another trigger pulse sequence provided by an embodiment of the present disclosure;
FIG. 18 schematically shows a schematic diagram of yet another trigger pulse sequence provided by an embodiment of the present disclosure;
FIG. 19 schematically shows a schematic flowchart of a linear scanning CT imaging method provided by an embodiment of the present disclosure;
FIG. 20 schematically shows a schematic flowchart of a method for processing projection data provided by an embodiment of the present disclosure;
FIG. 21A and FIG. 21B schematically show schematic diagrams of a method for proportionally processing second projection data provided by an embodiment of the present disclosure; and
FIG. 22 schematically shows a block diagram of an imaging device of a linear scanning CT imaging system provided by an embodiment of the present disclosure.

### DETAILED DESCRIPTION OF EMBODIMENTS

Specific embodiments of the present disclosure will be described in detail below. It should be noted that the embodiments described here are only for illustration and are not intended to limit the present disclosure. In the following description, numerous specific details are set forth in order to provide a thorough understanding of the present disclosure. However, it is apparent to those of ordinary skill in the art that the present disclosure may be practiced without these specific details. In other instances, well-known structures, materials or methods are not described in detail to avoid confusing the present disclosure.

Throughout the specification, references to "an embodiment," "the embodiment," "an example," or "the example" mean that a specific feature, structure, or characteristic described in connection with the embodiment or example is included in at least one embodiment of the present disclosure. Thus, the phrases "in an embodiment," "in embodiments," "an example," or "examples" that appear in various places throughout the specification do not necessarily refer to the same embodiment or example. Furthermore, specific features, structures, or characteristics may be combined in any suitable combination and/or sub-combination in one or more embodiments or examples. In addition, those of ordinary skill in the art should understand that the term "and/or" used herein includes any and all combinations of one or more of the associated listed items.

The terms used herein are only for describing specific embodiments and are not intended to limit the present disclosure. Terms such as "including" and "containing" used herein indicate the presence of a feature, step, operation, and/or component, but do not exclude the presence or addition of one or more other features, steps, operations, or components.

All terms (including technical and scientific terms) used herein have the meanings commonly understood by those skilled in the art unless otherwise defined. It should be noted that the terms used herein should be interpreted as having a meaning consistent with the context of the specification and should not be interpreted in an idealized or overly rigid manner.

In the specification of the present disclosure, digital radiography (also referred to as DR) imaging refers to a technology in which digital radiography is performed directly under computer control. For example, an amorphous silicon flat panel detector may convert a ray information that has passed through an object under inspection into digital signals, and then a computer reconstructs images and perform a series of image post-processing operations to generate a digital radiographic image of a scanned object.

Computed tomography (also referred to as CT) imaging refers to a process in which, after a tomographic scan is performed on an object under inspection using rays, analog signals received by the detector are converted into digital signals, an attenuation coefficient of each pixel is calculated by an electronic computer, and then an image is reconstructed to display a tomographic structure of each part of the object under inspection.

It should be noted that the linear scanning CT imaging system and method provided by embodiments of the present disclosure are suitable for security inspection of objects in public places, capable of obtaining a distribution map of internal attenuation coefficients of an object and automatically identifying hazardous items, and particularly advantageous in the security inspection of large objects (such as containers).

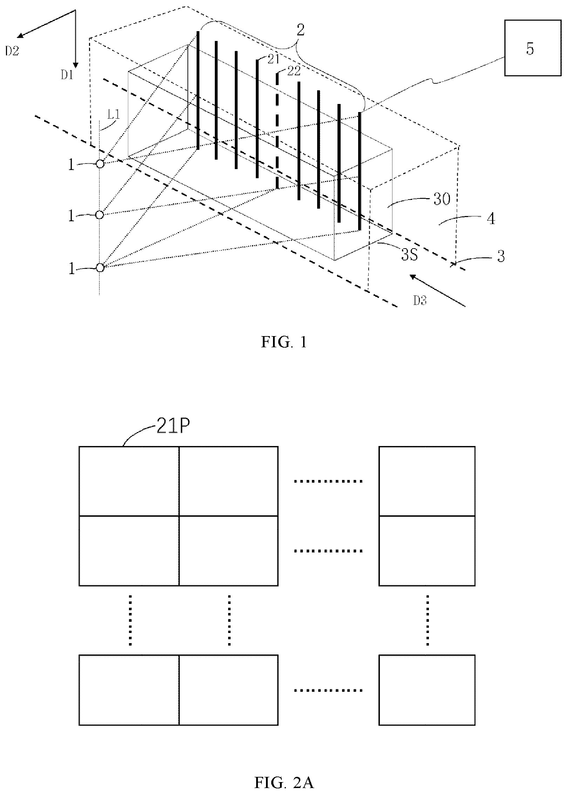

FIG. 1 shows a schematic structural diagram of a linear scanning CT imaging system provided by an embodiment of the present disclosure. The linear scanning CT imaging system in FIG. 1 includes a conveying device 3, m ray sources 1, n detectors 2, and an imaging device 5. Exemplarily, m is a positive integer greater than or equal to 2, and n is a positive integer greater than or equal to 3.

Specifically, the conveying device 3 is used to move a scanned object 30 in a predetermined conveying direction D3 (as indicated by the arrow in FIG. 1) in a scanning channel 4, where the conveying device 3 includes a conveying surface 3S for placing the scanned object 30. Exemplarily, the conveying device 3 may be implemented in the form of belt conveying, chain conveying, gear conveying, or other conveying manners, which is not limited herein. For example, the scanned object 30 is placed on the conveying surface 3S of the conveying device 3. It should be noted that in some exemplary embodiments, a power mechanism of the conveying device 3 may support both unidirectional conveying and bidirectional conveying.

In the embodiment of FIG. 1, the scanning channel 4 is a linear scanning channel, which means that a motion trajectory of the scanned object 30 in the scanning region is a linear trajectory.

Continuing to refer to FIG. 1, the m ray sources 1 are used to alternately emit ray beams to form a scanning region, where the m ray sources 1 are located on a side of the scanning channel 4. In some exemplary embodiments of the present disclosure, the m ray sources 1 are sequentially arranged at intervals in a first straight line L1. The first straight line L1 is an imaginary straight line extending along a first direction D1, and the first direction D1 is perpendicular to the conveying surface 3S. That is, a plurality of ray sources 1 are distributed at different heights on a vertical line, and the plurality of ray sources 1 alternately emit ray beams to form a scanning region.

Exemplarily, the ray source 1 may be an accelerator, the energy of which may be adjusted and the radiation of which has strong penetrability. It should be noted that embodiments of the present disclosure do not impose any particular limitation on the type of the ray source 1. In other embodiments, the ray source 1 may be another type of ray source, such as an X-ray machine.

Continuing to refer to FIG. 1, the n detectors 2 are used to detect projection data formed by the ray beams transmitted through the scanned object 30 during a process of the scanned object 30 passing through the scanning region. The n detectors are located on the other side of the scanning channel 4 and are sequentially arranged at intervals in the conveying direction D3.

In an embodiment of the present disclosure, as shown in FIG. 1, the n detectors 2 include n1 first detectors 21 (schematically shown by solid lines in FIG. 1) and n2 second detectors 22 (schematically shown by dashed lines in FIG. 1). For example, n1 is a positive integer greater than or equal to 2, and n2 is a positive integer greater than or equal to 1. The n1 first detectors 21 are used to detect first projection data formed by the ray beams transmitted through the scanned object 30 during the process of the scanned object 30 passing through the scanning region. The n2 second detectors 22 are used to detect second projection data formed by the ray beams transmitted through the scanned object 30 during the process of the scanned object 30 passing through the scanning region.

The imaging device 5 is used to: generate a digital radiographic image (i.e., DR image) of the scanned object 30 according to the second projection data; and generate a computed tomography image (i.e., CT image) of the scanned object 30 according to the first projection data and the second projection data.

In the linear scanning CT imaging system according to embodiments of the present disclosure, during the security inspection of the scanned object, the conveying device 3 may move the scanned object in the conveying direction in the scanning channel so that the scanned object passes through the scanning region formed by the ray beams alternately emitted from the plurality of ray sources 1. Subsequently, the plurality of first detectors and second detectors may detect first projection data and second projection data formed by the ray beams emitted from the plurality of ray sources 1 and transmitted through the scanned object during the process of the scanned object passing through the scanning region. Then, the imaging device may generate a computed tomography image of the scanned object according to the first projection data and the second projection data from the plurality of ray sources 1, and generate a digital radiographic image of the scanned object according to the second projection data from the plurality of ray sources 1. On this basis, image interpretation may be performed using both the digital radiographic image and the computed tomography image of the scanned object to determine whether prohibited items are present. In other words, in the linear scanning CT imaging system according to embodiments of the present disclosure, DR imaging and CT imaging may be performed simultaneously in a single scan. CT imaging helps to avoid issues such as overlapping or occlusion, while DR imaging may improve image quality and avoid problems such as resolution deterioration and artifacts.

It should be noted that, referring to FIG. 1, the scanned object 30 moves in the scanning channel 4 and passes through the scanning region. In the process of the scanned object 30 passing through the scanning region, the plurality of ray sources 1 alternately emit ray beams, and the first detector 21 and the second detector 22 simultaneously detect the first projection data and the second projection data, respectively, so that DR imaging and CT imaging may be performed simultaneously in a single scan. Therefore, in embodiments of the present disclosure, the scanned object 30 does not need to undergo DR imaging first and then CT imaging, that is, it is not necessary to separate the scanning segment for DR imaging from the scanning segment for CT imaging. As a result, in terms of special arrangement, it is possible to reduce an occupied space of the linear scanning CT imaging system and achieve a compact linear scanning CT imaging system; in terms of time, it is possible to shorten the imaging time for generating the DR image and the CT image, which helps improve the detection efficiency.

It should also be noted that, in embodiments of the present disclosure, by providing both the first detector 21 and the second detector 22 for the plurality of ray sources 1, DR imaging and CT imaging may be performed simultaneously in a single scan, and the scanned object 30 does not need to repeatedly pass through the scanning region. For example, the conveying device 3 does not need to move the scanned object 30 bidirectionally to repeatedly pass through the scanning region. Therefore, in terms of structure, it is possible to simplify the structure of the conveying device 3; in terms of time, it is possible to shorten the imaging time for forming the DR image and the CT image, which helps improve the detection efficiency.

Particularly advantageously, since DR imaging and CT imaging may be performed simultaneously in a single scan and the scanned object 30 does not need to repeatedly pass through the scanning region, the linear scanning CT imaging system and method provided by embodiments of the present disclosure are particularly suitable for security inspection of large objects (such as containers).

It should also be noted that, in embodiments of the present disclosure, the scanning channel 4 is a linear scanning channel, which means that a motion trajectory of the scanned object 30 in the scanning region is a linear trajectory. Therefore, the scanned object 30 moves along a single linear trajectory relative to the ray source and the detector, and there is no need to provide rotary motion components such as slip rings with complex structures, which helps simplify the structural complexity of the linear scanning CT imaging system and improve the reliability of the linear scanning CT imaging system.

It should also be noted that, in embodiments of the present disclosure, the plurality of ray sources 1 are arranged in a first straight line, that is, the ray sources are distributed linearly. The plurality of ray sources are controlled to emit beams alternately, enabling scanning and imaging of the scanned object 30 from multiple angles. As a result, it is possible to avoid using structurally complex rotary components such as slip rings to drive the motion of the ray sources, thereby simplifying the structural complexity of the linear scanning CT imaging system and improving the reliability of the linear scanning CT imaging system.

It should also be noted that, in embodiments of the present disclosure, the second detector used for DR imaging and the first detector used for CT imaging are arranged in the conveying direction. By altering the arrangement of the detectors, DR imaging and CT imaging may be performed simultaneously, thereby improving the image quality without increasing the structural complexity of the system.

In an embodiment of the present disclosure, at least one second detector 22 is different from each first detector 21. Specifically, the second detector 22 may be used for DR imaging, and the first detector 21 may be used for CT imaging. That is, the DR image formed by the second detector 22 has a higher resolution than the CT image formed by the first detector 21. In other words, at least one second detector 22 has a higher resolution than each first detector 21.

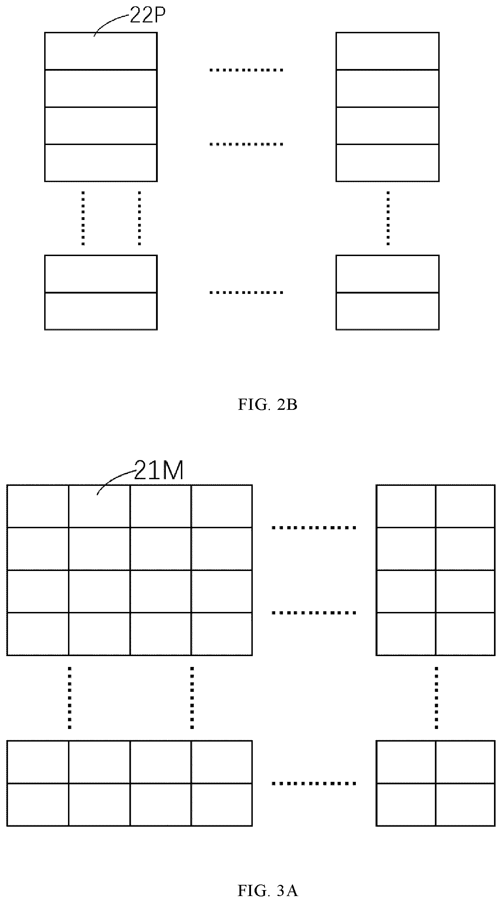

FIG. 2A and FIG. 2B schematically show structural diagrams of the first detector and the second detector, respectively.

For example, referring to FIG. 2A and FIG. 2B, the first detector 21 may include a plurality of pixels 21P, and the second detector 22 may include a plurality of pixels 22P. At least one second detector 22 has more pixels than each first detector 21.

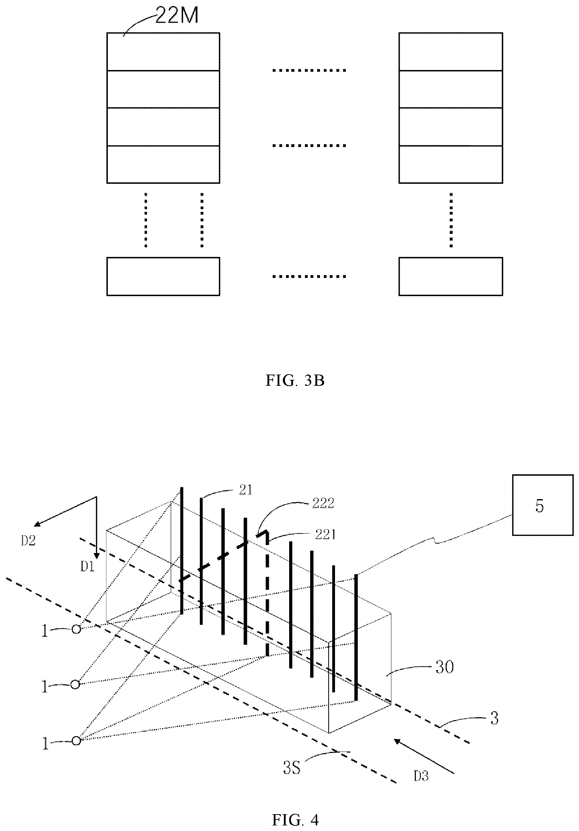

In some exemplary embodiments, continuing to refer to FIG. 3A and FIG. 3B, the first detector 21 may include a plurality of first detector modules 21M, and the second detector 22 may include a plurality of second detector modules 22M. For example, the first detector module 21M may include at least one pixel 21P, and the second detector module 22M may include at least one pixel 22P. An arrangement of the plurality of first detector modules 21M is different from that of the plurality of second detector modules 22M. For example, the plurality of first detector modules 21M may be arranged in an array of r1 rows and c1 columns, and the plurality of second detector modules 22M may be arranged in an array of r2 rows and c2 columns, where r1, r2, c1 and c2 are positive integers greater than or equal to 2, r1 may be different from r2, and/or c1 may be different from c2.

For another example, referring to FIG. 2A and FIG. 2B, at least one second detector 22 has a smaller pixel size than each first detector 21. Exemplarily, the pixel 21P of the first detector 21 may have a substantially rectangular shape, and the pixel 22P of the second detector 22 may have a substantially rectangular shape. At least one of a length and a width of the pixel 21P is smaller than at least one of a length and a width of the pixel 22P. It should be noted that the shapes of the pixels of the first detector and the second detector are not limited to rectangular shapes, and may be any suitable shapes, which is not particularly limited in embodiments of the present disclosure.

In embodiments of the present disclosure, by setting the pixel size, pixel arrangement and/or module arrangement of the first detector and the second detector, the number of pixels per unit area of the first detector is less than that of the second detector, so that the image formed by the second detector has a higher resolution than the image formed by the first detector.

In some exemplary embodiments, at least one second detector 22 is made of a different crystal material from each first detector 21, and at least one second detector 22 exhibits less crystal afterglow than each first detector 21.

It should be noted that the term "crystal afterglow" here refers to an afterglow effect of crystal. When the ray beam emitted by the ray source 1 passes through a light receiving surface and enters an interior of each crystal, even after the ray beam is absorbed by the crystal and a projection image after attenuation is generated, a residual signal may persist for a period of time.

In some exemplary embodiments, at least one second detector 22 has a different thickness in a ray incident direction from each first detector 21.

In some exemplary embodiments, at least one second detector 22 has a higher detection efficiency than each first detector 21.

In some exemplary embodiments, as shown in FIG. 1, the n1 first detectors 21 are linear detector arrays; and/or the n2 second detectors 22 are linear detector arrays. Compared with an area detector array, a linear detector array may offer more flexible configuration and lower cost.

In some exemplary embodiments, the number of ray sources 1 is m, and the number of detectors is n, where m is a positive integer greater than or equal to 2, and n is a positive integer greater than or equal to 3. Each detector may acquire attenuation signals of ray beams emitted by each ray source 1 from a certain angle, i.e., a piece of projection data. Therefore, m × n pieces of projection data may be obtained during a single scanning process.

FIG. 4 shows a schematic structural diagram of a linear scanning CT imaging system provided by an embodiment of the present disclosure, in which the second detector is schematically shown to include an L-shaped detector. The linear scanning CT imaging system in FIG. 4 includes: a conveying device 3, m ray sources 1, n detectors 2, and an imaging device 5. Exemplarily, m is a positive integer greater than or equal to 2, and n is a positive integer greater than or equal to 3.

In an embodiment of the present disclosure, as shown in FIG. 4, the n detectors 2 include n1 first detectors 21 (schematically shown by solid lines in FIG. 4) and n2 second detectors 22 (schematically shown by dashed lines in FIG. 4). For example, n1 is a positive integer greater than or equal to 2, and n2 is a positive integer greater than or equal to 1. The n1 first detectors 21 are used to detect first projection data formed by the ray beams transmitted through the scanned object 30 during the process of the scanned object 30 passing through the scanning region. The n2 second detectors 22 are used to detect second projection data formed by the ray beams transmitted through the scanned object 30 during the process of the scanned object 30 passing through the scanning region.

As shown in FIG. 4, the n1 first detectors 21 are linear detector arrays; and/or at least one second detector 22 includes a vertical-arm detector 221 arranged in the first direction D1 and a horizontal-arm detector 222 arranged in the second direction D2, where the second direction D2 intersects both the conveying direction D3 and the first direction D1.

By adding a horizontal-arm detector, the second detector may perform scanning and imaging of the scanned object at a larger scanning angle, which helps improve the quality of the DR image.

Continuing to refer to FIG. 4, the added horizontal-arm detector may primarily target a lowermost ray source 1, that is, during the scanning process, the horizontal-arm detector 222 mainly receives signals of the ray beams emitted by the lowermost ray source 1 and attenuated by the scanned object.

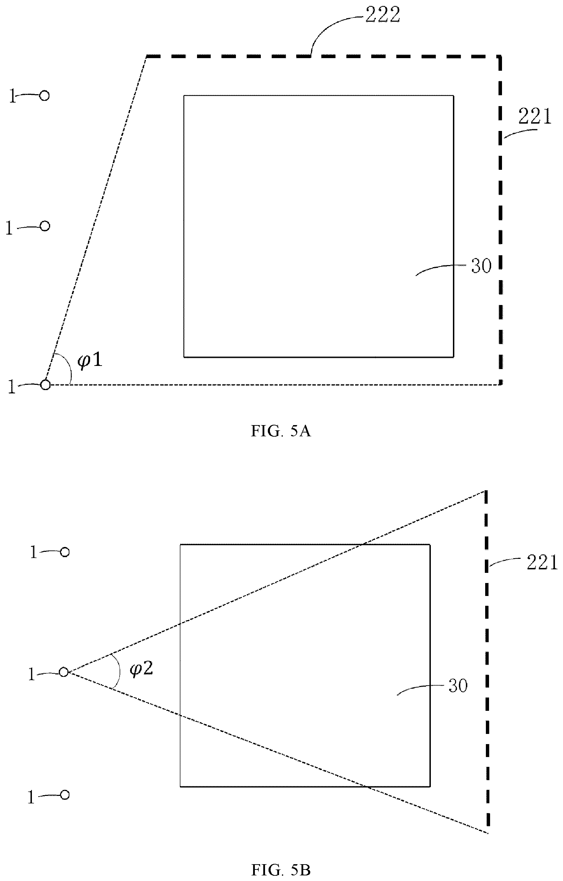

FIG. 5A and FIG. 5B respectively schematically show side views of the linear scanning CT imaging system observed in the conveying direction. Referring to FIG. 5A and FIG. 5B, a cone angle φ1 of the lowermost ray source 1 is larger than a cone angle φ2 of any other ray source 1. Thus, during the scanning process, the ray beam emitted by the lowermost ray source 1 has a larger cone angle, so that the vertical-arm detector 221 and the horizontal-arm detector 222 may detect the signals of the ray beams emitted by the lowermost ray source 1 and attenuated by the scanned object; the ray beams emitted by other ray sources 1 have a smaller cone angle, so that the ray beams emitted by other ray sources 1 may not negatively affect the DR imaging due to scattering or other factors.

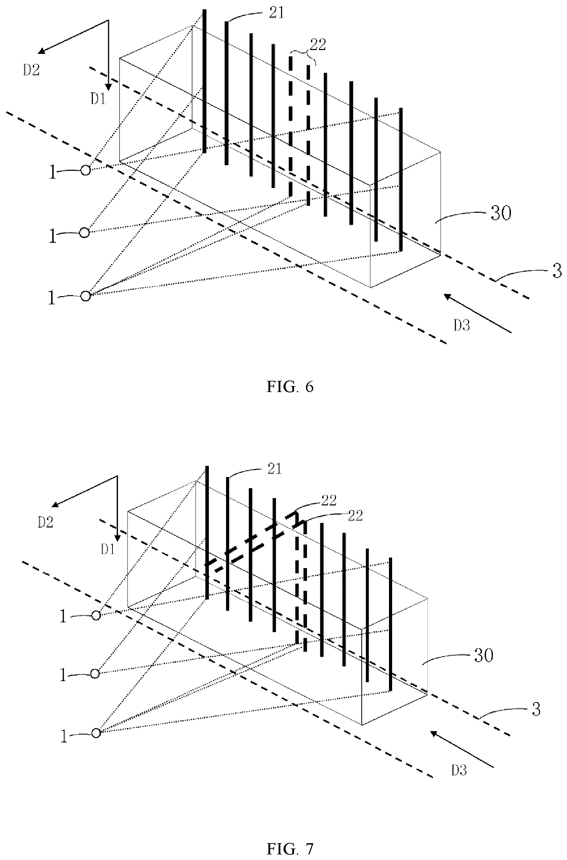

FIG. 6 and FIG. 7 respectively show schematic structural diagrams of the linear scanning CT imaging system provided by an embodiment of the present disclosure, in which the second detector is schematically shown to include a plurality of sub-detectors.

As shown in FIG. 6 and FIG. 7, at least one second detector 22 includes k sub-detectors, where k is a positive integer greater than or equal to 2, and the k sub-detectors are sequentially arranged at intervals in the conveying direction.

An arrangement interval in the conveying direction between any two adjacent sub-detectors among the k sub-detectors is less than an arrangement interval in the conveying direction between any two adjacent first detectors 21 among the n1 first detectors 21.

As shown in FIG. 6, each sub-detector is a linear detector array. As shown in FIG. 7, each sub-detector is an L-shaped detector, that is, each sub-detector may include a vertical-arm detector and a horizontal-arm detector.

In this embodiment, the imaging device is used to combine the second projection data of the k sub-detectors to generate a digital radiographic image of the scanned object. The second detector formed by a plurality of densely arranged sub-detectors may further improve the DR imaging quality of the scanned object.

It should be noted that the term "combine" here includes various data processing methods such as reorganization, integration, and resampling. For example, if the second detector 22 includes two sub-detectors and each sub-detector collect 1000 columns of data frames per scan, the 1000 columns of data collected by each of the two sub-detectors may be interleaved, resulting in an image with 2000 columns, which is equivalent to doubling a spatial sampling rate in the motion direction.

It should be noted that in the embodiments shown in FIG. 6 and FIG. 7, the second detector is schematically shown to adopt a dual-row (i.e., k=2) arrangement with a small inter-row spacing. However, embodiments of the present disclosure are not limited thereto. In other embodiments, the second detector may adopt an arrangement with more rows and a small inter-row spacing.

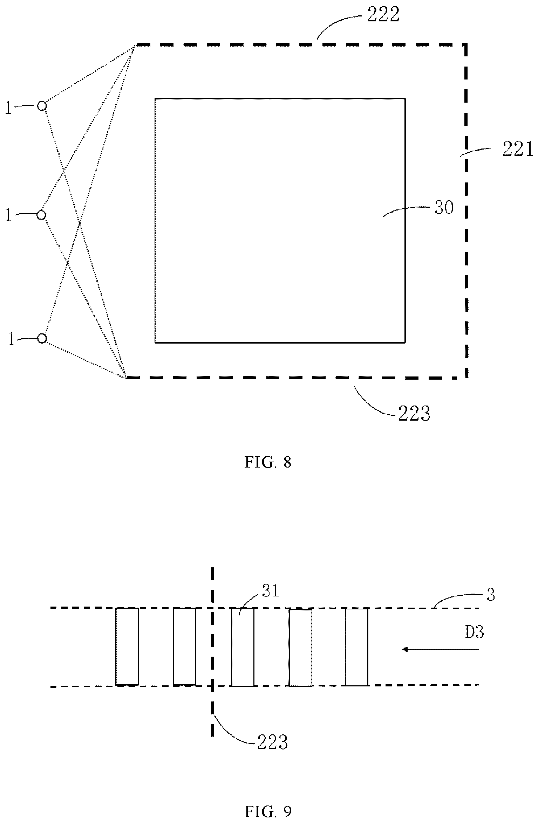

FIG. 8 shows a side view of the linear scanning CT imaging system provided by an embodiment of the present disclosure, in which the second detector is schematically shown to include a U-shaped detector.

As shown in FIG. 8, the n1 first detectors 21 are linear detector arrays. At least one second detector 22 includes a vertical-arm detector 221 arranged in the first direction D1, a first horizontal-arm detector 222 arranged in the second direction D2, and a second horizontal-arm detector 223 arranged in the second direction D2. The first horizontal-arm detector 222 and the second horizontal-arm detector 223 are respectively located on an upper side and a lower side of the vertical-arm detector 221 in the first direction D1.

Continuing to refer to FIG. 8, the added two horizontal-arm detectors may target all ray sources 1, that is, during the scanning process, the first horizontal-arm detector 222 and the second horizontal-arm detector 223 receive the signals of the ray beams emitted by all ray sources 1 and attenuated by the scanned object. Accordingly, in the embodiment shown in FIG. 8, the ray beams emitted by the three ray sources 1 all have a large cone angles φ.

By adding two horizontal-arm detectors, the second detector may perform scanning and imaging of the scanned object at a larger scanning angle, which helps improve the quality of the DR image.

FIG. 9 shows a top view of the linear scanning CT imaging system provided by an embodiment of the present disclosure, in which a relative positional relationship between the second detector and the conveying device is schematically shown.

Referring to FIG. 9, the conveying device 3 may include a plurality of conveying rollers 31. In the conveying direction D3, the second horizontal-arm detector 223 is located at a gap between two adjacent conveying rollers 31.

Referring to FIG. 8 and FIG. 9, when a roller-type track is used in a linear track transport, rail cars and turntables at both ends of the linear motion track facilitate loading/unloading and rotation of cargoes. A horizontal-arm detector 223 may be additionally installed at the gap between two rollers. In this configuration, all ray beams emitted by the ray sources 1 may be used for DR imaging, enabling DR imaging from multiple perspectives. Moreover, the conveying rollers 31 do not obstruct the signals received by the horizontal-arm detector 223, which helps further improve the quality of the DR imaging.

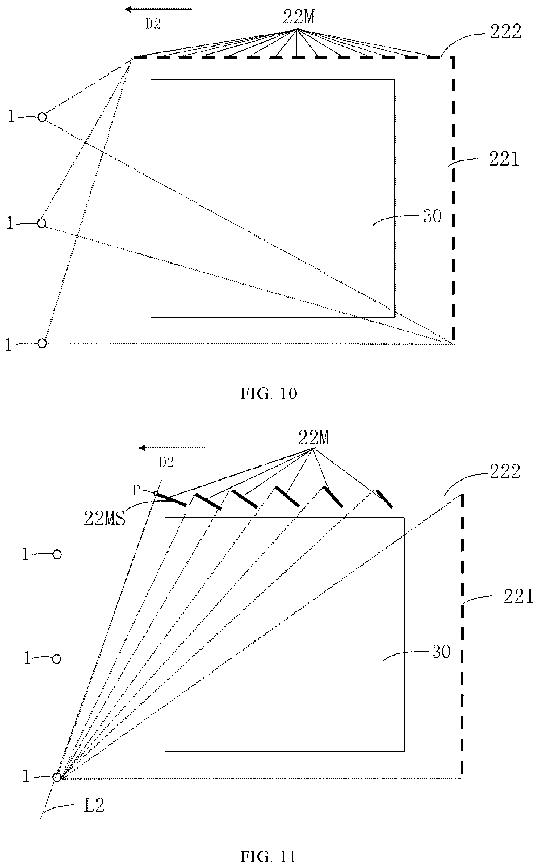

FIG. 10 shows a side view of a linear scanning CT imaging system provided by an embodiment of the present disclosure, in which an arrangement of the horizontal-arm detector of the second detector is schematically shown. Referring to FIG. 3B and FIG. 10, the horizontal-arm detector 222 may include a plurality of detector modules 22M, which may be connected end to end in sequence.

In this embodiment, the horizontal-arm detector may target all ray sources 1, that is, during the scanning process, the horizontal-arm detector 222 receives the signals of the ray beams emitted by all ray sources 1 and attenuated by the scanned object. Accordingly, in the embodiment shown in FIG. 10, the ray beams emitted by the three ray sources 1 all have a large cone angles φ. As a result, the DR images formed by the ray beams emitted by all ray sources 1 are continuous and without truncation.

FIG. 11 shows a side view of a linear scanning CT imaging system provided by an embodiment of the present disclosure, in which another arrangement of the horizontal-arm detector of the second detector is schematically shown. Referring to FIG. 3B and FIG. 11, the horizontal-arm detector 222 may include a plurality of detector modules 22M, which are arranged at intervals in the second direction D2.

In this embodiment, the light receiving surface 22MS of each detector module 22M is perpendicular to a second straight line L2. The second straight line L2 is defined as a straight line connecting an i^{th} ray source 1 and a predetermined point P on the light receiving surface 22MS, where i is a positive integer greater than or equal to 1 and less than or equal to m.

It should be noted that the "predetermined point P on the light receiving surface 22MS" may be an end point, a central point, or another suitable point on the light receiving surface 22MS of the detector module, that is, the predetermined point P on the light receiving surface 22MS may be located on a boundary of or within the light receiving surface 22MS, which is not particularly limited in embodiments of the present disclosure.

Through such a configuration, each detector module of the horizontal-arm detector may be oriented toward a specific ray source 1. For example, in the embodiment shown in FIG. 11, each detector module of the horizontal-arm detector is oriented toward the lowermost ray source 1. On this basis, a clearer DR image may be obtained through the second detector.

In this embodiment, the ray beam emitted by the ray source 1 is incident into the crystal of the horizontal-arm detector perpendicularly. When the ray beam is incident into the crystal perpendicularly, a thickness the ray beam traverses through the crystal is equal to a thickness of the crystal, and an effective crystal area is equal to an actual area of the light receiving surface of the crystal. Therefore, in embodiments of the present disclosure, by perpendicular incidence into the crystal, on the one hand, an effective traversal thickness of the ray beam through the crystal may be increased, which enhances the penetration power of the ray beam, resulting in more comprehensive projection data carried by the detected projection image; on the other hand, the effective crystal area may be equal to the actual area of the light receiving surface, which increases a spatial resolution of the ray beam, leading to higher-resolution projection data carried by the detected projection image.

In some exemplary embodiments of the present disclosure, the n detectors may include a single second detector 22, and at least one first detector 21 is arranged on each side of the single second detector 22 in the conveying direction D3. In this embodiment, by simply replacing a single column of detectors, a clearer and more complete DR image may be obtained at low cost without degrading the CT image quality.

Exemplarily, referring to FIG. 1, a plane P1 defined by the single second detector 22 and the first straight line L1 is perpendicular to the conveying direction D3. When the ray beam emitted by the ray source 1 is a cone beam, this configuration allows a central beam plane of the cone beam to directly face the second detector 22, which helps obtain a clearer and more complete DR image.

In other exemplary embodiments of the present disclosure, the n detectors may include a plurality of second detectors, that is, the number n2 of second detectors 22 is greater than or equal to 2.

It should be noted that in some exemplary embodiments of the present disclosure, a total number of first detectors 21 and second detectors 22 is an odd number. The odd number of detectors are arranged at interval in the conveying direction, and a second detector is located in the middle. For example, a plane P1 defined by the second detector 22 in the middle and the first straight line L1 is perpendicular to the conveying direction D3. For another example, the other even number of detectors are arranged symmetrically with respect to the second detector 22 in the middle. Through such an arrangement, the central beam plane of the cone beam may directly face the second detector 22, which helps obtain a clearer and more complete DR image.

It should also be noted that in other exemplary embodiments of the present disclosure, the total number of first detectors 21 and second detectors 22 is an even number. The even number of detectors are arranged at intervals in the conveying direction, and the two detectors in the middle includes at least one second detector 22. For example, a plane P1 defined by the second detector 22 in the middle and the first straight line L1 is not perpendicular to the conveying direction D3.

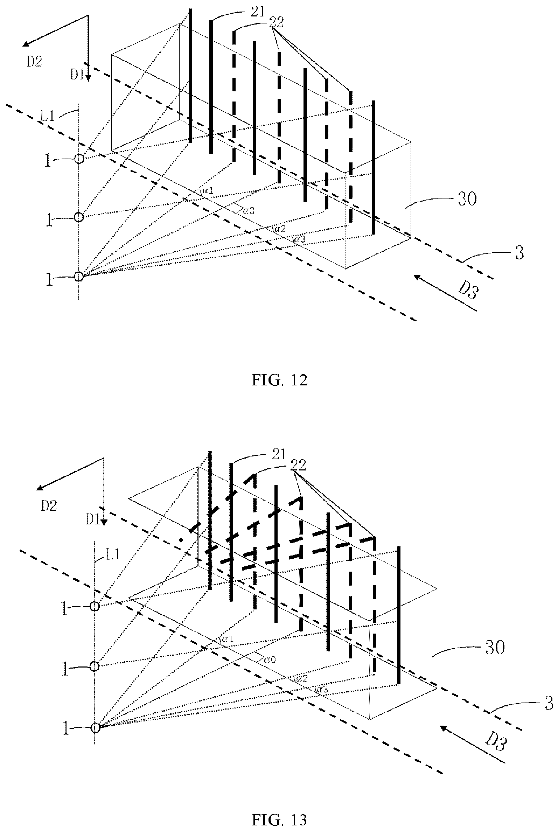

FIG. 12 shows a schematic structural diagram of a linear scanning CT imaging system provided by an embodiment of the present disclosure, in which a plurality of second detectors are schematically shown.

Referring to FIG. 12, the number n2 of second detectors 22 is greater than or equal to 2, and the n2 second detectors 22 and the n1 first detectors 21 are alternately arranged in the conveying direction D3.

It should be noted that the "alternately arranged" here may mean that along the conveying direction D3, at least one first detector 21 is arranged on opposite sides of at least one second detector 22, and/or at least one first detector 21 is arranged on opposite sides of at least two second detectors 22. As shown in FIG. 12, along the conveying direction D3, for some of the second detectors 22, each second detector 22 has one first detector 21 arranged on each side; for the other second detectors 22, two second detectors 22 have one first detector 21 arranged on each side.

In this embodiment, by increasing the number of second detectors 22, it is possible to obtain DR images from multiple viewing angles, which helps improve the quality of the DR imaging.

Continuing to refer to FIG. 12, among the n2 second detectors 22, a plane defined by one second detector 22 and the first straight line L1 is perpendicular to the conveying direction D3, and a plane defined by any other second detector 22 and the first straight line L1 forms an angle greater than 90° or less than 90° with the conveying direction D3.

For example, as shown in FIG. 12, a plane defined by a second one counting from left to right of the second detectors 22 and the first straight line L1 forms an angle *α*0 of approximately 90° with the conveying direction D3, a plane defined by a first one counting from left to right of the second detectors 22 and the first straight line L1 forms an angle *α*1 greater than 90° with the conveying direction D3, and planes defined by a third one and a fourth one counting from left to right of the second detectors 22 and the first straight line L1 respectively form angles *α*2 and *α*3 less than 90° with the conveying direction D3. Exemplarily, *α*1 > *α*0 > *α*2 > *α*3, which means that the angles between the planes where the second detectors arranged along the conveying direction and the first straight line L1 are located and the conveying direction D3 gradually decrease.

By properly arranging the angle between each second detector and the central beam plane of the ray source, the viewing angle for acquiring DR images may be appropriately designed, which helps further improve the quality of the DR imaging.

FIG. 13 shows a schematic structural diagram of a linear scanning CT imaging system provided by an embodiment of the present disclosure, in which a plurality of L-shaped second detectors are schematically shown.

Referring to FIG. 13, the number n2 of second detectors 22 is greater than or equal to 2. The n2 second detectors 22 and the n1 first detectors 21 are alternately arranged along the conveying direction D3. Each of the n2 second detectors includes a vertical-arm detector 221 arranged along the first direction D1 and a horizontal-arm detector 222 arranged along the second direction D2.

Continuing to refer to FIG. 13, for each second detector, a plane formed by an intersection of the vertical-arm detector 221 and the horizontal-arm detector 222 of the second detector extends through the first straight line L1.

Through such a configuration, a placement angle of the horizontal-arm detector is matched with an optical path of the ray beam emitted by the ray source, thus DR image data without distortion may be generated.

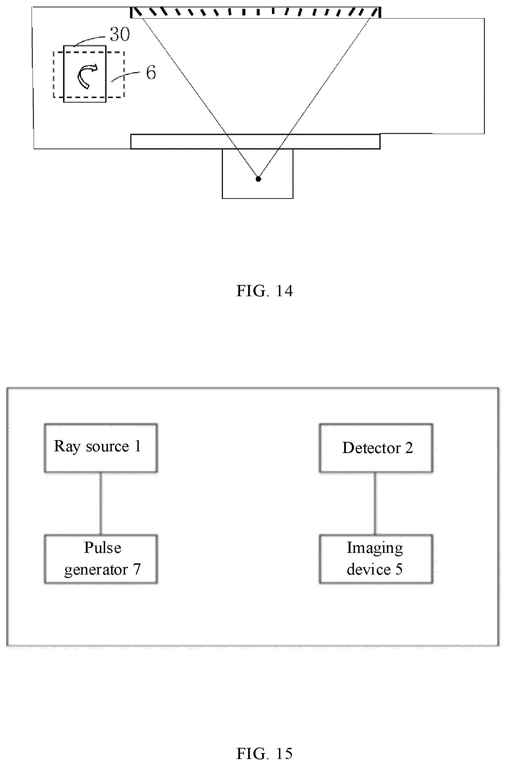

In some exemplary embodiments of the present disclosure, referring to FIG. 14, the linear scanning CT imaging system may further include a rotary device 6 located at one or both ends of the conveying device 3. The rotary device 6 is used to rotate the scanned object by a predetermined angle when the scanned object has passed through the scanning region and reaches an end side of the conveying device 3.

For example, the conveying device 3 may further be used to move the rotated scanned object to pass through the scanning region again. The detector 2 may further be used to detect the first projection data and the second projection data formed by the ray beams emitted by the plurality of ray sources 1 and transmitted through the rotated scanned object during the process of the scanned object passing through the scanning region again. The imaging device 5 may further be used to generate a digital radiographic image of the scanned object according to the second projection data, and obtain a three-dimensional reconstructed image of the scanned object according to the first projection data and the second projection data.

It should be noted that the step of rotating the scanned object by a predetermined angle and moving it to pass through the scanning region may be performed multiple times. It will be understood by those skilled in the art that the more times the scanned object passes through the scanning region in a single inspection, the more complete the irradiation angle of the scanned object, and thus the higher the quality of the reconstructed image.

A working process of the linear scanning CT imaging system according to embodiments of the present disclosure will be described in detail below. Exemplarily, the working process of the linear scanning CT imaging system may include the following steps.

First, a scanned object 30 is fixed on a conveying device 3, so that the scanned object 30 moves along a conveying direction D3 of the conveying device 3 in a scanning channel 4.

Next, a plurality of ray sources 1 distributed in the vertical direction alternately emit beams to form a scanning region.

Then, the first detector 21 and the second detector 22 respectively detect first projection data and second projection data formed by the ray beams emitted by the plurality of ray sources 1 and transmitted through the scanned object during the process of the scanned object passing through the scanning region.

Subsequently, the imaging device 4 generates a digital radiographic image of the scanned object according to the second projection data, and obtains a computed tomography image of the scanned object according to the first projection data and the second projection data.

According to embodiments of the present disclosure, referring to FIG. 15, the linear scanning CT imaging system may further include a pulse generator 7, which is used to generate a trigger pulse sequence for controlling the plurality of ray sources 1 to alternately emit ray beams. The pulse trigger sequence may be specifically implemented as the following cases.

In a first case, a cycle of the trigger pulse sequence includes trigger pulse signals corresponding one-to-one with the plurality of ray sources 1, and the trigger pulse signals are used to control the corresponding ray sources 1 to emit ray beams with the same energy.

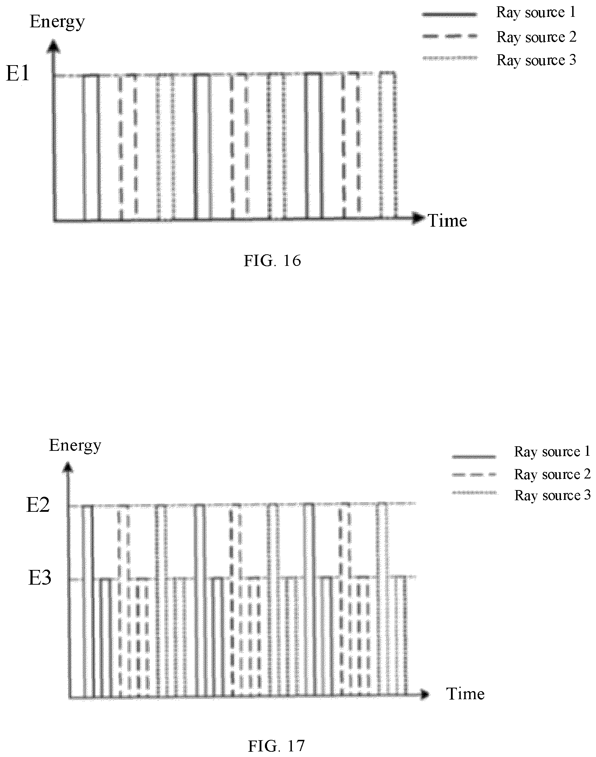

Exemplarily, FIG. 16 shows the trigger pulse signals corresponding one-to-one with three ray sources 1. The horizontal axis represents time, and the trigger pulse signals corresponding one-to-one with the three ray sources 1 are alternately arranged along the time axis. The vertical axis represents energy, and all the trigger pulse signals indicate the same energy E1. The projection image data obtained in this case is complete data that may be used for monoenergetic CT reconstruction.

In a second case, a cycle of the trigger pulse sequence includes sets of trigger pulse signals corresponding one-to-one with the plurality of ray sources 1. Each set of trigger pulse signals includes a first trigger pulse signal and a second trigger pulse signal, which are used to control the corresponding ray source 1 to sequentially emit a first ray sub-beam with a first energy and a second ray sub-beam with a second energy. The ray source 1 may be a dual-energy accelerator with adjustable energy.

Exemplarily, FIG. 17 shows sets of trigger pulse signals corresponding one-to-one with three ray sources 1, where each ray source 1 emits beams twice. The horizontal axis represents time, and the sets of trigger pulse signals corresponding one-to-one with the three ray sources 1 are alternately arranged along the time axis. The vertical axis represents energy, the first trigger pulse signal in each set of trigger pulse signals indicates energy E2, and the second trigger pulse signal in each set of trigger pulse signals indicate energy E3. The projection image data obtained in this case is complete data that may be used for dual-energy CT reconstruction.

A detailed explanation of the principle of dual-energy CT reconstruction will be provided below.

First, the scanned object is scanned using dual-energy ray to obtain dual-energy projection data.

Then, according to a pre-created lookup table or by solving a system of equations, basis material coefficient projection values corresponding to the dual-energy projection data are calculated. The method for creating a lookup table involves selecting two basis materials, calculating projection values of dual-energy ray passing through these two materials at different thicknesses, and obtaining the lookup table according to a relationship between high-and low-energy projection values and different thickness combinations. The method for analytically solving the system of equations is to compute the corresponding thickness combination by solving high-and low-energy projection system of equations under basis material decomposition using the actually obtained high-and low-energy projection values.

Then, from the projection values of the basic materials, a distribution image of basis material coefficients may be obtained. From the distribution of basis material coefficients, it is possible to obtain the atomic number, the characteristic density image, and the attenuation coefficient image of the scanned object at any energy, enabling material classification and automatic identification of the scanned object.

It should be noted that in order to perform dual-energy CT reconstruction using the projection image data obtained in the second case, the linear scanning CT imaging system further includes a decomposition unit. The decomposition unit may decompose each of the first projection data and the second projection data into first projection sub-data corresponding to the first ray sub-beam and second projection sub-data corresponding to the second ray sub-beam. The imaging device may obtain a reconstructed image of the scanned object according to the first projection sub-data and the second projection sub-data of the first projection data as well as the first projection sub-data and the second projection sub-data of the second projection data.

In a third case, the ray source 1 may be a monoenergetic accelerator with adjustable energy. A cycle of the trigger pulse sequence includes trigger pulse signals corresponding one-to-one with the plurality of ray sources 1. During a first scan of the scanned object 30, the trigger pulse signals are used to control the corresponding ray sources 1 to emit ray beams with the same first energy; during a second scan of the scanned object 30, the trigger pulse signals are used to control the corresponding ray sources 1 to emit ray beams with the same second energy.

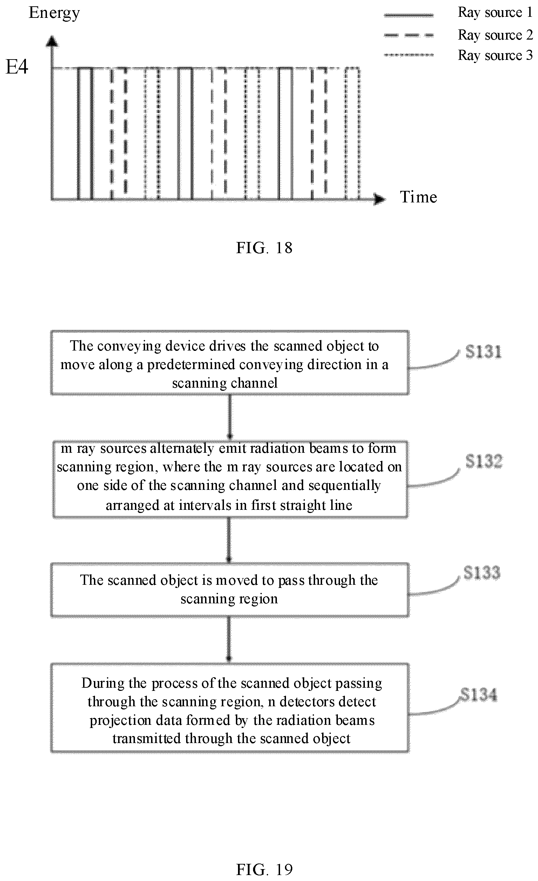

Exemplarily, during the first scan, all trigger pulse signals indicate energy E1 (referring to FIG. 16); during the second scan, all trigger pulse signals indicate energy E4 (referring to FIG. 18). The projection image data acquired in this way may also be used for dual-energy CT reconstruction, and the obtained image information of the scanned object 30 includes high-energy attenuation coefficient, low-energy attenuation coefficient, atomic number, electron density and other information, thereby enabling material classification and automatic identification of the scanned object.

FIG. 19 shows a schematic flowchart of a linear scanning CT imaging method provided by an embodiment of the present disclosure, which is applicable to the linear scanning CT imaging system as described above. The linear scanning CT imaging method in FIG. 19 includes step S131 to step S134.

In step S131, the conveying device 3 drives the scanned object to move along a predetermined conveying direction in the scanning channel, where the conveying device 3 includes a conveying surface for placing the scanned object.

In step S132, m ray sources 1 alternately emit ray beams to form a scanning region, where the m ray sources 1 are located on a side of the scanning channel, and m is a positive integer greater than or equal to 2.

In step S133, the scanned object is moved to pass through the scanning region.

In step S134, during the process of the scanned object passing through the scanning region, n detectors detect projection data formed by the ray beams transmitted through the scanned object, where the n detectors are located on the other side of the scanning channel and are sequentially arranged at intervals along the conveying direction, and n is a positive integer greater than or equal to 3. The n detectors include n1 first detectors 21 and n2 second detectors 22, n1 is a positive integer greater than or equal to 2, and n2 is a positive integer greater than or equal to 1.

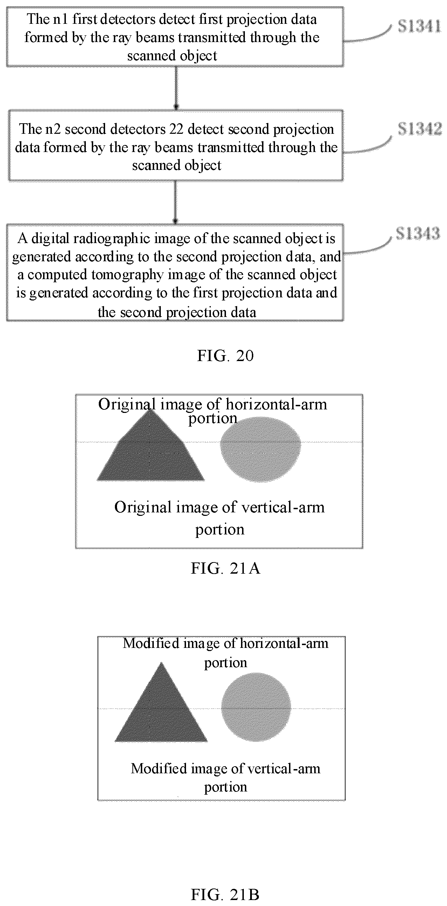

FIG. 20 shows a schematic flowchart of a method for processing projection data according to an embodiment of the present disclosure. Step S134 may further include step S1341 to step S1343.

In step S1341, the n1 first detectors 21 detect first projection data formed by the ray beams transmitted through the scanned object.

In step S1342, the n2 second detectors 22 detect second projection data formed by the ray beams transmitted through the scanned object.

In step S1343, a digital radiographic image of the scanned object is generated according to the second projection data, and a computed tomography image of the scanned object is generated according to the first projection data and the second projection data.

Exemplarily, the data obtained by the second detector 22 and the data obtained by the first detector 21 may be used together for CT reconstruction to obtain a three-dimensional reconstructed image of the inspected object for display.

For example, the data obtained by the second detector 22 may be directly used for reconstruction, or it may be equivalently converted to data obtained by a first detector 21 at the same position, and then conventional linear CT reconstruction may be performed.

In some exemplary embodiments, at least one second detector 22 includes a vertical-arm detector arranged along the first direction and a horizontal-arm detector arranged along the second direction, where the second direction intersects both the conveying direction and the first direction.

FIG. 21A and FIG. 21B show schematic diagrams of a method for proportionally processing second projection data according to an embodiment of the present disclosure.

In some exemplary embodiments, generating the digital radiographic image of the scanned object according to the second projection data includes: proportionally adjusting the second projection data detected by the vertical-arm detector and the second projection data detected by the horizontal-arm detector, and then combining adjusted data to generate the digital radiographic image of the scanned object, so as to eliminate visual inconsistency at the junction of the image.

For example, referring to FIG. 7, at least one second detector 22 includes k sub-detectors, where k is a positive integer greater than or equal to 2. The k sub-detectors are sequentially arranged at intervals along the conveying direction. An arrangement interval in the conveying direction between any two adjacent sub-detectors among the k sub-detectors is smaller than an arrangement interval in the conveying direction between any two adjacent first detectors 21 among the n1 first detectors 21. Generating the digital radiographic image of the scanned object according to the second projection data includes: combining the second projection data of the k sub-detectors to generate the digital radiographic image of the scanned object.

If the second detector 22 adopts a dual-row or multi-row arrangement with a small inter-row spacing, the data may be processed by combining multiple rows of data to produce a single-row DR image for display.

In some exemplary embodiments, the linear scanning CT imaging system further includes a pulse trigger. Before the step of alternately emitting ray beams by the plurality of ray sources 1 to form a scanning region, the linear scanning CT imaging method further includes: generating, by the pulse trigger, a trigger pulse sequence for controlling the plurality of ray sources 1 to alternately emit ray beams.

A cycle of the trigger pulse sequence may include trigger pulse signals corresponding one-to-one with the plurality of ray sources 1. The trigger pulse signals are used to control the corresponding ray sources 1 to emit ray beams with the same energy.

A cycle of the trigger pulse sequence may also include sets of trigger pulse signals corresponding one-to-one with the plurality of ray sources 1. Each set of trigger pulse signals includes a first trigger pulse signal and a second trigger pulse signal, which are used to control the corresponding ray source 1 to sequentially emit a first ray sub-beam with a first energy and a second ray sub-beam with a second energy.

The imaging device may decompose each of the first projection data and the second projection data into first projection sub-data corresponding to the first ray sub-beam and second projection sub-data corresponding to the second ray sub-beam. The imaging device may obtain a reconstructed image of the scanned object according to the first projection sub-data and the second projection sub-data of the first projection data as well as the first projection sub-data and the second projection sub-data of the second projection data.

In some exemplary embodiments, if the ray source 1 operates in a dual-energy emission mode and the second detector 22 is an energy-resolving detector, it is possible to achieve spectral DR imaging with more comprehensive spectral measurements, resulting in more accurate image colors and enabling a wider range of material classification.

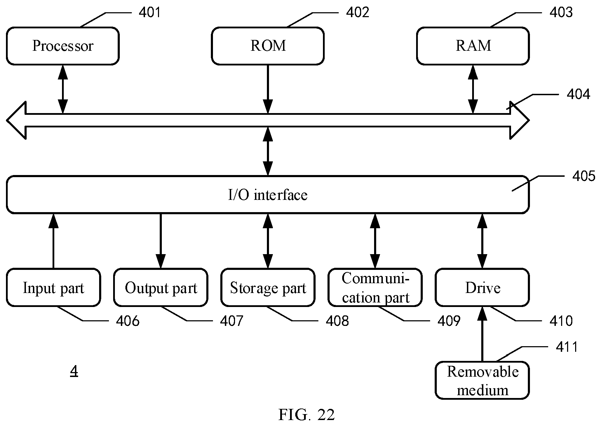

FIG. 22 schematically shows a block diagram of an imaging device of a linear scanning CT imaging system according to an embodiment of the present disclosure.

As shown in FIG. 22, an imaging device 4 of a linear scanning CT imaging system according to an embodiment of the present disclosure may include a processor 401, which may execute various appropriate actions and processing according to the program stored in a read only memory (ROM) 402 or the program loaded into a random access memory (RAM) 403 from a storage part 408. The processor 401 may include, for example, a general-purpose microprocessor (for example, CPU), an instruction set processor and/or a related chipset and/or a special-purpose microprocessor (for example, an application specific integrated circuit (ASIC)), and the like. The processor 401 may further include an on-board memory for caching purposes. The processor 401 may include a single processing unit or multiple processing units for executing different actions of the method flow according to embodiments of the present disclosure.

Various programs and data required for the operation of the electronic device 400 are stored in the RAM 403. The processor 401, the ROM 402 and the RAM 403 are connected to each other through a bus 404. The processor 401 executes various operations of the method flow according to embodiments of the present disclosure by executing the programs in the ROM 402 and/or the RAM 403. It should be noted that the program may also be stored in one or more memories other than the ROM 402 and the RAM 403. The processor 401 may also execute various operations of the method flow according to embodiments of the present disclosure by executing the programs stored in the one or more memories.

According to embodiments of the present disclosure, the electronic device 400 may further include an input/output (I/O) interface 405, which is also connected to the bus 404. The electronic device 400 may further include one or more of the following components connected to the I/O interface 405: an input part 406 including a keyboard, a mouse, etc.; an output part 407 including a cathode ray tube (CRT), a liquid crystal display (LCD), etc. and a speaker, etc.; a storage part 408 including a hard disk, etc.; and a communication part 409 including a network interface card such as a LAN card, a modem, and the like. The communication part 409 performs communication processing via a network such as the Internet. A drive 410 is also connected to the I/O interface 405 as required. A removable medium 411, such as a magnetic disk, an optical disk, a magneto-optical disk, a semiconductor memory, and the like, is installed on the drive 410 as required, so that the computer program read therefrom is installed into the storage part 408 as needed.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

In embodiments of the present disclosure, a linear scanning CT imaging system and a corresponding linear scanning CT imaging method are provided. In the linear scanning CT imaging system, a system design for DR based on linear CT is implemented without affecting the original scanning method of linear CT, and the linear CT scanning steps are not increased. By simply replacing one or several columns of detectors, it is possible to obtain clearer and more complete DR images without degrading the quality of the three-dimensional reconstructed images. When the ray source operates in a dual-energy emission mode, the color accuracy of the DR image is improved. When the ray source operates in a dual-energy emission mode and the second detector is an energy-resolving detector, it is possible to achieve spectral DR imaging with more comprehensive spectral measurements, resulting in more accurate image colors and enabling a wider range of material classification.

In the linear scanning CT imaging system according to embodiments of the present disclosure, DR imaging and CT imaging may be performed simultaneously in a single scan. CT imaging helps to avoid issues such as overlapping or occlusion, while DR imaging improves image quality to allow observation of the detailed structure of the scanned object, and avoid problems such as resolution degradation and artifacts.

Embodiments of the present disclosure have been described above. However, these embodiments are merely for illustrative purposes and are not intended to limit the scope of the present disclosure. Although the embodiments have been described separately above, this does not mean that measures in the embodiments may not be used in combination advantageously. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. A linear scanning CT imaging system, comprising:
a conveying device configured to move a scanned object in a predetermined conveying direction in a scanning channel, wherein the conveying device comprises a conveying surface for placing the scanned object;
m ray sources configured to alternately emit ray beams to form a scanning region, wherein the m ray sources are located on a side of the scanning channel, and m is a positive integer greater than or equal to 2; and
n detectors configured to detect projection data formed by the ray beams transmitted through the scanned object during a process of the scanned object passing through the scanning region, wherein the n detectors are located on the other side of the scanning channel and are sequentially arranged at intervals in the conveying direction, and n is a positive integer greater than or equal to 3,
wherein the n detectors comprise n1 first detectors and n2 second detectors, n1 is a positive integer greater than or equal to 2, and n2 is a positive integer greater than or equal to 1; the n1 first detectors are configured to detect first projection data formed by the ray beams transmitted through the scanned object during the process of the scanned object passing through the scanning region; the n2 second detectors are configured to detect second projection data formed by the ray beams transmitted through the scanned object during the process of the scanned object passing through the scanning region; and
wherein the system further comprises an imaging device configured to: generate a digital radiographic image of the scanned object according to the second projection data; and generate a computed tomography image of the scanned object according to the first projection data and the second projection data.

2. The system according to claim 1, wherein at least one of the second detectors is different from each of the first detectors.

3. The system according to claim 2, wherein at least one of the second detectors has a higher resolution than each of the first detectors.

4. The system according to claim 3, wherein at least one of the second detectors has a greater number of pixels than each of the first detectors; and/or
at least one of the second detectors has a smaller pixel size than each of the first detectors.

5. The system according to any one of claims 2 to 4, wherein at least one of the second detectors is made of a different crystal material from each of the first detectors; and/or
at least one of the second detectors has a different thickness in a ray incident direction from each of the first detectors.

6. The system according to claim 5, wherein at least one of the second detectors exhibits less crystal afterglow than each of the first detectors; and/or
wherein at least one of the second detectors has a higher detection efficiency than each of the first detectors.

7. The system according to any one of claims 2 to 6, wherein the first detector comprises a plurality of first detector modules, the second detector comprises a plurality of second detector modules, and an arrangement of the plurality of first detector modules is different from an arrangement of the plurality of second detector modules.

8. The system according to any one of claims 1 to 7, wherein each of the n1 first detector is a linear detector array; and/or
wherein each of the n2 second detector is a linear detector array.

9. The system according to any one of claims 1 to 7, wherein each of the n1 first detectors is a linear detector array; and/or
wherein at least one of the second detectors comprises a vertical-arm detector arranged in a first direction and a horizontal-arm detector arranged in a second direction, and the second direction intersects both the conveying direction and the first direction.

10. The system according to any one of claims 1 to 7, wherein each of the n1 first detectors is a linear detector array; and/or
wherein at least one of the second detectors comprises a vertical-arm detector arranged in a first direction, a first horizontal-arm detector arranged in a second direction and a second horizontal-arm detector arranged in the second direction, the first horizontal-arm detector and the second horizontal-arm detector are respectively located on an upper side and a lower side of the vertical-arm detector in the first direction, and the second direction intersects both the conveying direction and the first direction.

11. The system according to any one of claims 1 to 10, wherein the m ray sources are sequentially arranged at intervals in a first straight line, and the first straight line is an imaginary straight line extending along a first direction perpendicular to the conveying surface.

12. The system according to any one of claims 1 to 11, wherein the n detectors include a single second detector, and at least one first detector is disposed on each side of the single second detector along the conveying direction.

13. The system according to claim 12, wherein a plane defined by the single second detector and the first straight line is perpendicular to the conveying direction.

14. The system according to any one of claims 1 to 11, wherein at least one of the second detectors comprises k sub-detectors sequentially arranged at intervals in the conveying direction, and k is a positive integer greater than or equal to 2; and
wherein an arrangement interval in the conveying direction between any two adjacent sub-detectors among the k sub-detectors is smaller than an arrangement interval in the conveying direction between any two adjacent first detectors among the n1 first detectors.

15. The system according to claim 14, wherein the imaging device is further configured to: combine the second projection data from the k sub-detectors to generate the digital radiographic image of the scanned object.

16. The system according to claim 9 or 10, wherein the horizontal-arm detector comprises a plurality of detector modules connected end to end in sequence.

17. The system according to claim 9 or 10, wherein the horizontal-arm detector comprises a plurality of detector modules arranged at intervals in the second direction.

18. The system according to claim 16, wherein a light receiving surface of each detector module is perpendicular to a second straight line, the second straight line is a straight line connecting an i^{th} ray source and a predetermined point on the light receiving surface, the predetermined point is located on a boundary of or within the light receiving surface, and i is a positive integer greater than or equal to 1 and less than or equal to m.

19. The system according to claim 10, wherein the conveying device comprises a plurality of conveying rollers, and in the conveying direction, the second horizontal-arm detector is located at a gap between two adjacent conveying rollers.

20. The system according to any one of claims 1 to 10 and 14 to 19, wherein the number n2 of second detectors is greater than or equal to 2, and the n2 second detectors and the n1 first detectors are alternately arranged in the conveying direction.

21. The system according to claim 20, wherein among the n2 second detectors, a plane defined by one second detector and the first straight line is perpendicular to the conveying direction, and a plane defined by any other second detector and the first straight line form an angle greater than 90° or less than 90° with the conveying direction.

22. The system according to claim 20 or 21, wherein each of the n2 second detectors comprises a vertical-arm detector arranged in a first direction and a horizontal-arm detector arranged in a second direction, and the second direction intersects both the conveying direction and the first direction.

23. The system according to claim 22, wherein for each of the second detectors, a plane formed by an intersection of the vertical-arm detector and the horizontal-arm detector of the second detector extends through the first straight line.

24. The system according to any one of claims 1 to 23, wherein the scanning channel is a linear channel.

25. A linear scanning CT imaging method, comprising:
moving a scanned object in a predetermined conveying direction in a scanning channel by means of a conveying device, wherein the conveying device comprises a conveying surface for placing the scanned object;
alternately emitting ray beams from m ray sources to form a scanning region, wherein the m ray sources are located on a side of the scanning channel, and m is a positive integer greater than or equal to 2;
moving the scanned object to pass through the scanning region;
detecting projection data formed by the ray beams transmitted through the scanned object by means of n detectors during a process of the scanned object passing through the scanning region, wherein the n detectors are located on the other side of the scanning channel and are sequentially arranged at intervals in the conveying direction, and n is a positive integer greater than or equal to 3,
wherein the n detectors comprise n1 first detectors and n2 second detectors, n1 is a positive integer greater than or equal to 2, and n2 is a positive integer greater than or equal to 1;
wherein the detecting projection data formed by the ray beams transmitted through the scanned object by means of n detectors comprises: detecting first projection data formed by the ray beams transmitted through the scanned object by means of the n1 first detectors; and detecting second projection data formed by the ray beams transmitted through the scanned object by means of the n2 second detectors; and
wherein the method further comprises: generating a digital radiographic image of the scanned object according to the second projection data; and generating a computed tomography image of the scanned object according to the first projection data and the second projection data.

26. The method according to claim 25, wherein at least one of the second detectors comprises a vertical-arm detector arranged in a first direction and a horizontal-arm detector arranged in a second direction, and the second direction intersects both the conveying direction and the first direction; and
wherein the generating a digital radiographic image of the scanned object according to the second projection data comprises: proportionally adjusting the second projection data detected by the vertical-arm detector and the second projection data detected by the horizontal-arm detector, and then combining adjusted data to generate the digital radiographic image of the scanned object.

27. The method according to claim 25 or 26, wherein at least one of the second detectors comprises k sub-detectors sequentially arranged at intervals in the conveying direction, k is a positive integer greater than or equal to 2; an arrangement interval in the conveying direction between any two adjacent sub-detectors among the k sub-detectors is smaller than an arrangement interval in the conveying direction between any two adjacent first detectors among the n1 first detectors; and
wherein the generating a digital radiographic image of the scanned object according to the second projection data comprises: combining the second projection data from the k sub-detectors to generate the digital radiographic image of the scanned object.
